# EUROPÄISCHE PATENTANMELDUNG

(11) **EP 3 910 899 A1**
(43) Veröffentlichungstag der Anmeldung: **17.11.2021**
(21) Anmeldenummer: 20173815.0
(22) Anmeldetag: 11.05.2020
(51) Int. Cl.: H04L 29/06, H04L 29/08, G06F 21/60, F03D 7/04

(54) **VERFAHREN ZUM BEREITSTELLEN EINES ELEKTRONISCHEN SCHLÜSSELS FÜR EINEN ZUGRIFF AUF EINE WINDENERGIEANLAGE SOWIE ZUGRIFFSKONTROLLSYSTEM ZUM AUSFÜHREN DES VERFAHRENS**

(71) Anmelder: Wobben Properties GmbH, 26607 Aurich (DE)
(72) Erfinder: Jakobs, Thorsten, 26532 Großheide (DE); Behrends, Christoph, 26639 Wiesmoor (DE); Poolmann, Alexander, 26632 Ihlow (DE)
(74) Vertreter: Eisenführ Speiser

(57) **Zusammenfassung**

Die Erfindung betrifft ein Verfahren zum Bereitstellen eines elektronischen Schlüssels (30) für einen Zugriff, insbesondere einen Steuerzugriff, auf mindestens eine Windenergieanlage (100) oder mindestens einen Windparkregler (16) mit einem Zugriffskontrollsystem (20), das das Empfangen (44) einer Anfrage (48) für einen Zugriff auf eine oder mehrere mit der Anfrage (48) ausgewählte Windenergieanlagen (100) und/oder einen oder mehrere mit der Anfrage (48) ausgewählte Windparkregler (16) von einem Eingabemittel oder einer Datenschnittstelle (22) des Zugriffskontrollsystems (20), das Abrufen (46) von Daten (32) der einen oder jeder der ausgewählten Windenergieanlagen (100) und/oder des einen oder jedes der ausgewählten Windparkregler (16) durch das Zugriffskontrollsystem (20) und das Erstellen (58) und Ausgeben (60) mindestens eines elektronischen Schlüssels (30) für die eine oder jede der ausgewählten Windenergieanlagen (100) und/oder den einen oder jeden der ausgewählten Windparkregler (16), wenn ein Kriterium (56) erfüllt ist, wobei eine Entscheidung (52), ob das Kriterium (56) erfüllt ist, abhängig von den abgerufenen Daten (32) vom Zugriffskontrollsystem (20) getroffen wird, umfasst.

## Beschreibung

Die Erfindung betrifft ein Verfahren zum Bereitstellen eines elektronischen Schlüssels für einen Zugriff auf mindestens eine Windenergieanlage oder mindestens einen Windpark sowie ein Zugriffskontrollsystem.

Gemäß dem Stand der Technik sind Zugriffe, wie Steuer- und Lesezugriffe, auf eine Windenergieanlage oder mehrere Windenergieanlagen, die beispielsweise auch als Windpark organisiert sein können, möglich. Ein Zugriff auf mehrere Windenergieanlagen, die als Windpark organisiert sind, kann auch über einen dem Windpark zugeordneten Windparkregler erfolgen. Steuer- und Lesezugriffe auf einzelne Windenergieanlagen eines Windparks werden somit häufig als Lese- und Steuerzugriffe auf einen Windparkregler des Windparks realisiert.

Bei einem Zugriff, der ein Lesezugriff ist, kann ein Benutzer beispielsweise aktuelle Betriebsdaten, wie die zurzeit in das Versorgungsnetz eingespeiste Energie, auslesen oder abfragen. Lesezugriffe sind somit überwiegend als derartige Zugriffe anzusehen, bei denen nicht in den Betrieb der Windenergieanlage eingegriffen wird. Ein Lesezugriff ermöglicht beispielsweise keine Änderungen von Betriebsparametern einer Windenergieanlage durch einen Benutzer. Lesezugriffe sind daher als unkritisch für den Betrieb und insbesondere für ein Versorgungsnetz, mit dem die Windenergieanlage, auf die der Lesezugriff erfolgt, verbunden ist, einzustufen.

Demgegenüber kann bei Zugriffen, die Steuerzugriffe sind, direkt oder indirekt auf den Betrieb der Windenergieanlage oder den Windparkregler eingewirkt werden, indem zum Beispiel Betriebsparameter verändert werden. Betriebsparameter sind zum Beispiel Regelgrößen und dergleichen. Durch einen Steuerzugriff lassen sich beispielsweise auch ein oder mehrere Windenergieanlagen an- oder abschalten oder es kann eine Höhe sowie eine Spannung oder eine Frequenz einer aktuell von der oder den Windenergieanlagen erzeugten Energie, die in ein Versorgungsnetz eingespeist wird, variiert werden. Bei Steuerzugriffen handelt es sich daher um kritische Zugriffe für den Betreib. Insbesondere bei unsachgemäßer Steuerung einer Windenergieanlage kann diese beschädigt oder ein mit der Windenergieanlage verbundenes Versorgungsnetz beeinflusst werden.

Daher ist zum Erlangen eines Steuerzugriffs auf eine Windenergieanlage oder einen Windparkregler gemäß dem Stand der Technik eine Authentisierung eines Benutzers gegenüber einer Windenergieanlage oder einem Windparkregler nötig, um nur berechtigten Benutzern den Steuerzugriff zu erlauben. Eine Authentisierung eines Benutzers erfolgt gemäß dem Stand der Technik beispielsweise durch Übergabe eines Tupels aus Passwort und Benutzerkennung, mit denen sich der Benutzer gegenüber der Windenergieanlage oder dem Windparkregler bezüglich seiner Identität identifiziert. Durch Übergabe an die Windenergieanlage bzw. den Windparkregler werden dem Benutzer so Steuer- und Lesezugriffe erlaubt.

Benutzer können somit die Berechtigung haben, auch systemkritische Steuerzugriffsarten, zu denen zum Beispiel das Ein- und Abschalten der Windenergieanlage oder des Windparks zählen, auszuführen. Bei Kenntnis der Zugangsdaten eines derartig berechtigten Benutzers, nämlich beispielsweise des Tupels aus Benutzername und Passwort, sind daher kritische Steuerzugriffe auf eine Windenergieanlage oder einen Windparkregler möglich.

Gemäß eines Bedrohungsszenarios durch menschliches Fehlverhalten oder Sabotage ist es demnach möglich, bei Kenntnis der Zugangsdaten für mehrere Windparks oder Windenergieanlagen, die beispielsweise regional nahe beieinanderliegen, diese gleichzeitig abzuschalten. In dieser Region könnte hierdurch ein Versorgungsnetz komplett ausfallen, da durch ein gleichzeitiges Abschalten mehrerer Windparks mehr Energie von Verbrauchern angefordert würde als von den mit dem Versorgungsnetz verbundenen Energiequellen zur Verfügung steht.

Zur Erhöhung der Sicherheit sind daher Anstrengungen unternommen worden, das Bereitstellen von Steuerzugriffen sicherer zu gestalten. Hierzu ist beispielsweise bekannt, Zertifikate oder elektronische Schlüssel von einer Zertifizierungsstelle in begrenzter Anzahl auszugeben, um so die Gesamtzahl der Windenergieanlagen, auf die ein Steuerzugriff ermöglicht wird, zu begrenzen. Problematisch ist hier jedoch, dass eine Bestimmung der Anzahl der zu vergebenen Zertifikate mehrere Anforderungen erfüllen muss. Einerseits muss diese Anzahl so geringgehalten werden, dass hierdurch die Gefahr des Ausfalls eines Versorgungsnetzes verhindert oder reduziert wird. Andererseits muss die Anzahl ausreichend groß sein, um gewährleisten zu können, dass Servicepersonal ein ungehinderter Zugriff auf die Windenergieanlagen möglich ist, auf die innerhalb eines bestimmten Serviceintervalls und dafür geplanter Servicezeiten zugegriffen werden muss.

Aufgabe der vorliegenden Erfindung ist es daher Steuerzugriffe auf Windenergieanlagen und Windparkregler einerseits sicher zu gestalten und andererseits sicherzustellen, dass Serviceabläufe durch die Sicherungsmaßnahmen nicht beeinträchtigt werden. Insbesondere ist es Aufgabe der vorliegenden Erfindung eine Alternative zum Stand der Technik zu finden.

Hierzu betrifft die Erfindung ein Verfahren nach Anspruch 1. Erfindungsgemäß wird ein Verfahren zum Bereitstellen eines elektronischen Schlüssels für einen Zugriff, insbesondere einen Steuerzugriff, auf mindestens eine Windenergieanlage oder mindestens einen Windparkregler mit einem Zugriffskontrollsystem vorgeschlagen. Ein elektronischer Schlüssel kann auch als Token bezeichnet werden und umfasst vorzugsweise eine Zeichenfolge, die beispielsweise als Datei bereitgestellt ist. Der elektronische Schlüssel umfasst demnach vorzugsweise eine Softwarekomponente zur Identifizierung und Authentifizierung von Benutzern. Der elektronische Schlüssel dient somit vorzugsweise zum Identifizieren und Authentifizieren von Benutzern bei einer Windenergieanlage oder einem Windparkregler. Der elektronische Schlüssel kann auch so erzeugt werden, dass dieser für mehrere Windenergieanlagen und/oder mehrere Windparkregler eine Identifizierung und Authentifizierung von Benutzern zum Erhalten eines Zugriffs, insbesondere eines Steuerzugriffs, erlaubt.

Vorzugsweise umfasst ein elektronischer Schlüssel auch eine Gültigkeitsdauer oder ein Ablaufzeitpunkt, wobei der elektronische Schlüssel dann nur während der Gültigkeitsdauer oder bis zum Ablaufzeitpunkt gültig ist. Eine Gültigkeitsdauer kann beispielsweise 12 Stunden oder 24 Stunden betragen. Ein Ablaufzeitpunkt kann das Ende des Tages sein, an dem der elektronische Schlüssel ausgestellt wurde.

Das Verfahren umfasst das Empfangen einer Anfrage für einen Zugriff, insbesondere einen Steuerzugriff, auf eine oder mehrere mit der Anfrage ausgewählte Windenergieanlagen und/oder einen oder mehrere mit der Anfrage ausgewählte Windparkregler. Die Anfrage wird von einem Eingabemittel oder einer Datenschnittstelle des Zugriffskontrollsystems empfangen. Vorzugsweise übergibt ein Benutzer also eine Anfrage für einen Zugriff, der vorzugsweise ein Steuerzugriff ist, an das Zugriffskontrollsystem. Der Benutzer übergibt diese Anfrage an das Zugriffskontrollsystem beispielsweise durch ein Eingabemittel, das eine Tastatur oder ein Touchscreen oder dergleichen des Zugriffskontrollsystems selbst ist.

Gemäß einer Alternative wird die Anfrage über eine Datenschnittstelle des Zugriffskontrollsystems empfangen. Besondern bevorzugt ist die Datenschnittstelle beispielsweise eine Ethernet- oder Internetverbindung, über die die Anfrage von einem entfernten Computer oder mobilen Gerät, wie beispielsweise einem Laptop, einem Mobiltelefon oder einem Tablet-PC, das der Benutzer zur Generierung der Anfrage verwendet, empfangen wird. Die Anfrage umfasst zudem eine Auswahl von einer oder mehreren Windenergieanlagen und einem oder mehreren Windparkreglern, auf die ein Benutzer einen Zugriff wünscht.

Gemäß einem weiteren Schritt des Verfahrens werden durch das Zugriffskontrollsystem Daten der einen oder jeder der ausgewählten Windenergieanlagen und/oder des einen oder jedes der ausgewählten Windparkregler abgerufen. Das Abrufen erfolgt vorzugsweise über eine Datenverbindung. Die Datenverbindung verbindet vorzugsweise das Zugriffskontrollsystem direkt mit der einen oder jeder der ausgewählten Windenergieanlagen und/oder dem einen oder jedem der ausgewählten Windparkregler. Gemäß einer weiteren bevorzugten Alternative besteht die Datenverbindung zwischen dem Zugriffskontrollsystem und einem weiteren System, wobei das weitere System mit der einen oder jeder der ausgewählten Windenergieanlagen und/oder dem einen oder jedem der ausgewählten Windparkregler eine weitere oder die Datenverbindung aufweist, um die Daten abzurufen. Die Daten werden dann gemäß der Alternative indirekt durch das Zugriffskontrollsystem abgerufen. Demnach werden also von der oder den Windenergieanlagen und/oder Windparkreglern, die mit der Anfrage ausgewählt wurden, Daten direkt oder von einem weiteren System abgerufen, das die Daten von der oder den Windenergieanlagen und/oder Windparkreglern bereits abgerufen hat.

Weiterhin betrifft das Verfahren das Erstellen und Ausgeben mindestens eines elektronischen Schlüssels für die eine oder jede der ausgewählten Windenergieanlagen und/oder den einen oder jeden der ausgewählten Windparkregler, wenn ein Kriterium erfüllt ist. Erfindungsgemäß wird eine Entscheidung, ob das Kriterium erfüllt ist, abhängig von den abgerufenen Daten vom Zugriffskontrollsystem getroffen.

Zusammengefasst gibt das Zugriffskontrollsystem also einen oder mehrere elektronische Schlüssel für ausgewählte Windenergieanlagen und/oder Windparkregler aus, nachdem Daten dieser ausgewählten Windenergieanlagen und/oder Windparkregler abgerufen wurden und nachdem ein Kriterium erfüllt ist, das abhängig von diesen abgerufenen Daten ist. Das Zugriffskontrollsystem kann also aktuell abgerufene Daten mehrerer Windenergieanlagen oder Windparkregler, wie Betriebsdaten, die den jeweiligen Betriebszustand wiedergeben, bei der Vergabe eines elektronischen Schlüssels berücksichtigen. Hierdurch kann sichergestellt werden, dass der elektronische Schlüssel solange erzeugt wird, wie sich durch die Auswahl der Anfrage kein netzkritischer Zustand beim Zugriff auf die ausgewählten Windenergieanlagen oder Windparkregler einstellen kann, auch wenn dieser Zugriff beispielsweise das Ziel einer Sabotage ist.

Umfasst die Anfrage beispielsweise eine Auswahl mehrerer Windparkregler mehrerer Windparks und ergibt sich dann durch Abrufen der Daten, dass alle ausgewählten Windparkregler aufgrund einer gerade erst abgeschlossenen Aufstellung der Windparks noch gar nicht mit dem Versorgungsnetz verbunden sind, so kann das Zugriffskontrollsystem entscheiden, dass das Kriterium erfüllt ist. Ein oder mehrere elektronische Schlüssel werden daher erzeugt, um den vollen Zugriff auf alle der ausgewählten Windparkregler zu erhalten. Wird jedoch alternativ durch die abgerufenen Daten festgestellt, dass mehrere oder alle Windenergieanlagen der ausgewählten Windparks mit ihrer Nennleistung oder nahezu ihrer Nennleistung betrieben werden und dass die Windparks zusätzlich noch beispielsweise regional nahe beieinanderliegen, so entscheidet das Zugriffskontrollsystem, dass das Kriterium nicht erfüllt ist. Dementsprechend wird in diesem Fall kein elektronischer Schlüssel für den Zugriff auf den Windparkregler erzeugt.

Gemäß einer ersten Ausführungsform der Erfindung werden mit dem Zugriffskontrollsystem vor oder mit dem Empfangen der Anfrage für einen Steuerzugriff Anmeldedaten für einen Benutzer von dem Eingabemittel oder der Datenschnittstelle des Zugriffskontrollsystems empfangen. Weiter prüft das Zugriffskontrollsystem die Anmeldedaten und autorisiert den Benutzer in Abhängigkeit von dem Ergebnis der Prüfung für die weiteren Schritte. Anmeldedaten umfassen insbesondere einen Benutzernamen und ein Passwort. Ein Sicherheitsfaktor zur Erzeugung der elektronischen Schlüssel nur durch Benutzer, die gültige Anmeldedaten nachweisen können, ist somit geschaffen.

Gemäß einer weiteren Ausführungsform werden im Zugriffskontrollsystem in dem Fall, dass das Kriterium erfüllt ist, die empfangenen Daten oder daraus abgeleitete Daten gespeichert. Die Daten werden dabei mit Bezug oder mit Verweis auf den durch die Anmeldedaten identifizierten Benutzer gespeichert. Die empfangenen Daten bezeichnen hier die von der oder den ausgewählten Windenergieanlagen und/oder dem oder den ausgewählten Windparkreglern direkt oder indirekt empfangenen Daten. Aus den empfangenen Daten abgeleitete Daten sind Daten, die beispielsweise nur einen Teil der Informationen, die in den empfangenen Daten enthalten sind, aufweisen. Mit Bezug oder mit Verweis auf den Benutzer bezeichnet hier, dass die Daten, also entweder die empfangenen Daten oder die daraus abgeleiteten Daten, derart gespeichert werden, dass anhand der gespeicherten Daten nachvollziehbar ist, welcher Benutzer basierend auf seiner Auswahl der Windenergieanlagen und/oder Windparkregler den Abruf durch seine Anfrage eingeleitet hat. Die abgeleiteten Daten können auch Daten sein, aus denen sich erkennen lässt, für welche der Windenergieanlagen und/oder Windparks der Benutzer mindestens einen elektronischen Schlüssel erhalten hat. Vorzugsweise wird auch die Gültigkeitsdauer oder ein Ablaufzeitpunkt für den erzeugten elektronischen Schlüssel mitgespeichert.

Das Zugriffskontrollsystem stellt somit Informationen über den Benutzer und die Windenergieanlagen oder Windparks dar, die vom Benutzer ausgewählt wurden und für die ein elektronischer Schlüssel erstellt wurde, um so genau nachvollziehen zu können, für welche Windenergieanlagen oder Windparks der Benutzer zurzeit einen elektronischen Schlüssel besitzt und insbesondere auch, wie lange dieser elektronische Schlüssel noch gültig ist.

Gemäß einer weiteren Ausführungsform dienen die mit Bezug oder mit Verweis auf den identifizierten Benutzer gespeicherten Daten zusätzlich dazu, um zu entscheiden, ob das Kriterium, insbesondere bei einerweiteren oder neuen Anfrage durch den selben Benutzer, erfüllt oder weiterhin erfüllt ist. Führt ein Benutzer also eine erste Anfrage aus und wird daraufhin ein elektronischer Schlüssel für die ausgewählten Windenergieanlagen und/oder Windparkregler erstellt, da das Kriterium erfüllt ist, werden die empfangenen Daten oder von den empfangenen Daten abhängige Daten für den Benutzer gespeichert. Sendet dieser dann eine neue Anfrage, so werden neben den durch die neue Anfrage abgerufenen Daten von den mit der neuen Anfrage ausgewählten Windenergieanlagen oder Windparkreglern auch die gespeicherten Daten berücksichtigt, um im Zugriffskontrollsystem zu prüfen, ob das Kriterium erfüllt ist. Nur dann wird ein weiterer elektronischer Schlüssel erstellt. Hierdurch wird sichergestellt, dass ein Benutzer nicht allein durch mehrere nacheinander erzeugte Anfragen eine Berechtigung für einen Steuerzugriff auf eine beliebige Anzahl von Windenergieanlagen oder Windparks erlangen kann.

Gemäß einer weiteren Ausführungsform werden im Falle einer Ablehnung der Anfrage, wenn also das Zugriffskontrollsystem die Entscheidung trifft, dass das Kriterium nicht erfüllt ist, und daher keinen elektronischen Schlüssel ausgibt, Informationen ausgegeben, die aus den abgerufenen Daten und/oder den gespeicherten Daten abgeleitet werden. Diese Informationen umfassen insbesondere eine Anzeige für den Grund der Ablehnung, nämlich insbesondere, warum das Kriterium nicht erfüllt ist. Beschränkt das Kriterium beispielsweise die Anzahl der Windenergieanlagen und/oder Windparks, auf die ein Benutzer einen Steuerzugriff bekommen kann, so wird im Falle einer Anfrage, die entsprechend eine zu hohe Anzahl von Windenergieanlagen oder Windparks auswählt, eine Information darüber ausgegeben, die beispielsweise umfasst, dass die Anzahl zu hoch war und welche Anzahl möglich gewesen wäre.

Anhand dieser Informationen kann ein Benutzer dann eine angepasste neue Anfrage an das Zugriffskontrollsystem übersenden, bei der das Kriterium erfüllt ist.

Gemäß einer weiteren Ausführungsform wird der elektronische Schlüssel derart erzeugt, dass er einen Zugriff, nämlich einen Steuerzugriff, ermöglicht, der eine Änderung der erzeugten elektrischen Leistung einer oder mehrerer ausgewählter Windenergieanlagen und einer oder mehrerer mit den Windparkreglern verbundenen Windenergieanlagen erlaubt. Das Verfahren dient somit zum Bereitstellen elektronischer Schlüssel für Zugriffe auf Windenergieanlagen oder Windparks, durch die eine Änderung der erzeugten elektrischen Leistung ermöglicht wird.

Gemäß einer weiteren Ausführungsform umfassen die abgerufenen Daten zumindest einen Leistungswert der ausgewählten Windenergieanlage oder Leistungswerte jeweils jeder der ausgewählten Windenergieanlagen und/oder Windparks. Das Kriterium kann somit auf Leistungswerte aller ausgewählten Windenergieanlagen oder Windparks bezogen werden, um so nur elektronische Schlüssel für Steuerzugriffe zu erlauben, wenn die hierdurch beinflussbare Leistung unterhalb eines Grenzwerts, der das Kriterium oder einen Teil des Kriteriums darstellt, bleibt, so dass sichergestellt wird, dass durch Beeinflussung kein netzkritischer Zustand eintreten kann.

Gemäß einer weiteren Ausführungsform umfasst der Leistungswert einer Windenergieanlage oder eines Windparkreglers einen aktuellen Wert einer aktuell erzeugten elektrischen Leistung der Windenergieanlage oder der mit dem Windparkregler verbundenen Windenergieanlagen. Alternativ oder zusätzlich umfasst der Leistungswert einer Windenergieanlage oder eines Windparkreglers einen statistischen Wert, wie beispielsweise einen Mittelwert, einer in einem vorbestimmten in der Vergangenheit liegenden Zeitraum der erzeugten elektrischen Leistung der Windenergieanlage oder der mit dem Windparkregler verbundenen Windenergieanlagen. Alternativ oder zusätzlich umfasst der Leistungswert einen prognostizierten Wert einer elektrischen Leistung der Windenergieanlage oder der mit dem Windparkregler verbundenen Windenergieanlage. Der prognostizierte Wert ist vorzugsweise ein Maximalwert oder ein Durchschnittswert einer elektrischen Leistung, die innerhalb eines vordefinierten Zeitraums erwartet wird. Der vordefinierte Zeitraum ist vorzugsweise ein Gültigkeitszeitraum eines zu erzeugenden elektronischen Schlüssels für den Zugriff auf die Windenergieanlage oder den Windparkregler.

Dank dieser abgerufenen Daten mit den Leistungswerten, der entweder ein aktueller Wert, ein statistischer Wert oder ein prognostizierter Wert ist, kann abgeschätzt werden, welchen Einfluss ein Steuerzugriff auf ein Netz haben kann, wenn die Windenergieanlage oder die Gesamtheit der Windenergieanlagen, die ausgewählt wurden, beispielsweise nicht mehr ins Netz einspeisen. Ist oder umfasst der Leistungswert beispielsweise einen aktuellen Wert, so kann genau die derzeitige Situation erfasst werden und eine Auswirkung auf das Versorgungsnetz durch einen Steuerzugriff auf beispielsweise alle ausgewählten Anlagen zum jetzigen Zeitpunkt abgeschätzt werden. Ein statistischer Wert kann hier beispielsweise als zusätzlicher Wert zum aktuellen Wert beitragen, um zu prüfen, wie wahrscheinlich es ist, dass der aktuelle Wert sich im Zeitraum, für den beispielsweise der elektronische Schlüssel eine Gültigkeit behält, verändert, um so ebenfalls den Einfluss von Steuerzugriffen abschätzen zu können und das Kriterium insofern einzustellen. Ein prognostizierter Wert einer elektrischen Leistung der Windenergieanlage in den abgerufenen Daten stellt eine weitere Möglichkeit dar, um abzuschätzen, welchen Einfluss ein Steuerzugriff auf ein Netz haben kann.

Gemäß einer weiteren Ausführungsform sendet das Zugriffskontrollsystem einen Leistungsbegrenzungsbefehl an die ausgewählte oder alle ausgewählten Windenergieanlagen und/oder den ausgewählten oder alle ausgewählten Windparks. Der Leistungsbegrenzungsbefehl dient zum Begrenzen der erzeugten elektrischen Leistung, vorzugsweise für eine Gültigkeitsdauer des entsprechenden elektronischen Schlüssels. Insbesondere wird durch den Leistungsbegrenzungsbefehl, vorzugsweise für die Gültigkeitsdauer des elektronischen Schlüssels, die Leistung für den Zugriff auf die Windenergieanlage oder den Windparkregler beschränkt oder begrenzt. Besonders bevorzugt ist die Leistung auf einen Wert begrenzt, der gleich oder geringer als der abgefragte aktuelle Wert ist. Unabhängig von einem prognostizierten oder statistischen Wert kann so gewährleistet werden, dass eine Windenergieanlage zumindest nicht im Hinblick auf Ihre aktuell erzeugte Leistung so betrieben werden kann, dass die Leistung gegenüber dem aktuellen Zeitpunkt erhöht wird.

Insbesondere, wenn mehrere Windenergieanlagen demnach beim Abrufen der Daten mit einer vergleichsweise geringen Leistung betrieben werden, kann so die Anzahl der Windenergieanlagen, für die ein elektronischer Schlüssel erzeugt wird, vergleichsweise erhöht werden, da durch den Leistungsbegrenzungsbefehl sichergestellt wird, dass auch weiterhin diese Windenergieanlagen, für die der elektronische Schlüssel erzeugt wird, nur so weiter betrieben werden, dass die elektrische Leistung vergleichsweise gering gehalten wird.

Gemäß einerweiteren Ausführungsform ist für jeden identifizierbaren Benutzer ein Schwellenwert oder jeweils ein Schwellenwert hinterlegt, der insbesondere für jeden der Benutzer gleich ist. Dieser Schwellenwert ist im Zugriffskontrollsystem hinterlegt. Zur Erfüllung des Kriteriums werden die Daten der ausgewählten oder aller ausgewählten Windenergieanlagen und/oder Windparks sowie die gespeicherten Daten mit dem Schwellenwert verglichen. Das Kriterium ist somit in einfacher Weise auf beispielsweise eine Leistung bezogen, die als Schwellenwert festgelegt wird. Solange die abgerufenen Daten unterhalb dieses Leistungswerts bleiben, wird die Entscheidung getroffen, dass das Kriterium erfüllt ist.

Gemäß einer weiteren Ausführungsform wird eine Summe aus allen als Leistungswerte empfangenen Daten, insbesondere die Summe aus allen aktuellen Werten, statistischen Werten oder prognostizierten Werten der empfangenen Daten, sowie der gespeicherten Daten miteinander addiert. Wenn die Summe der Addition auf oder unterhalb des Schwellenwerts liegt, gilt das Kriterium als erfüllt und es wird ein elektronischer Schlüssel für die Windenergieanlagen und/oder Windparks, von denen die Daten empfangen wurden, erstellt. Ein Gesamtleistungswert kann somit als Schwellenwert festgelegt werden und es werden so lange elektronische Schlüssel für Windenergieanlagen oder Windparks ausgegeben, so lange die hierdurch beinflussbare Leistung unterhalb des Schwellenwerts bleibt. Das Kriterium entspricht damit der Anforderung, dass die Summe auf oder unterhalb des vordefinierten Schwellenwerts liegt.

Gemäß einer weiteren Ausführungsform ist im Zugriffskontrollsystem eine Tabelle mit spezifischen Daten für jede auswählbare Windenergieanlage und/oder jeden auswählbaren Windparkregler hinterlegt. Im Falle, dass der Abruf von Daten von einer der mehreren Windenergieanlagen und/oder Windparkregler fehlschlägt, werden die spezifischen Daten für die Windenergieanlage oder den Windparkregler, von dem keine Daten abgerufen werden können, als abgefragte Daten verwendet. Demnach ist auch ein elektronisches Zertifikat in dem Fall ausgebbar, dass eine oder mehrere Windenergieanlagen und/oder Windparkregler nicht auf das Abfragen der Daten antworten oder keine Daten an das weitere System geliefert haben, von dem das Zugriffskontrollsystem die Daten abruft.

Gemäß einer weiteren Ausführungsform entsprechen die spezifischen Daten einer Windenergieanlage der Nennleistung der Windenergieanlage und die spezifischen Daten eines Windparkreglers der Summe der Nennleistungen aller mit dem Windparkregler verbundenen Windenergieanlagen. Hierdurch wird sichergestellt, dass wenn ein Steuerzugriff auf eine Windenergieanlage oder einen Windparkregler gewünscht wird, und diese Windenergieanlage keine Daten direkt oder indirekt an das Zugriffskontrollsystem liefert, bei der Prüfung des Kriteriums angenommen wird, dass die Windenergieanlage oder der Windparkregler mit Nennleistung einspeist. So wird zwar ein Gesamtkontingent zu steuernder Windenergieanlagen oder Windparks möglicherweise zu stark beschränkt, wobei jedenfalls auch im Fall eines Fehlers der Datenverbindung elektronische Schlüssel ausgegeben werden können und weiterhin das Versorgungsnetz gegen Angriffe durch die starke Beschränkung geschützt ist.

Weiterhin umfasst die Erfindung ein Zugriffskontrollsystem, das eingerichtet ist, das Verfahren nach einer der vorgenannten Ausführungsformen auszuführen.

Gemäß einer Ausführungsform des Zugriffskontrollsystems umfasst das Zugriffskontrollsystem eine Schnittstelle zum Verbinden mit einem Computer eines Benutzers. Alternativ oder zusätzlich ist das Zugriffskontrollsystem mit mehreren auswählbaren Windenergieanlagen und/oder auswählbaren Windparkreglern über eine Datenverbindung direkt oder indirekt über ein weiteres System verbunden. Die Datenverbindung dient vorzugsweise, um Daten jeder der Windenergieanlagen und/oder Windparkregler innerhalb eines vordefinierten Abrufzeitintervalls, das vorzugsweise geringer als fünf Minuten oder geringer als eine Minute oder geringer als fünf Sekunden ist, abrufen zu können.

Weitere Ausführungsformen ergeben sich anhand der in den Figuren näher erläuterten Ausführungsbeispiele. Hierbei zeigen:
- Fig. 1: eine Windenergieanlage,
- Fig. 2: ein Zugriffskontrollsystem, das mit mehreren Windenergieanlagen über eine Datenverbindung verbunden ist und
- Fig.3: die Schritte des Verfahrens.

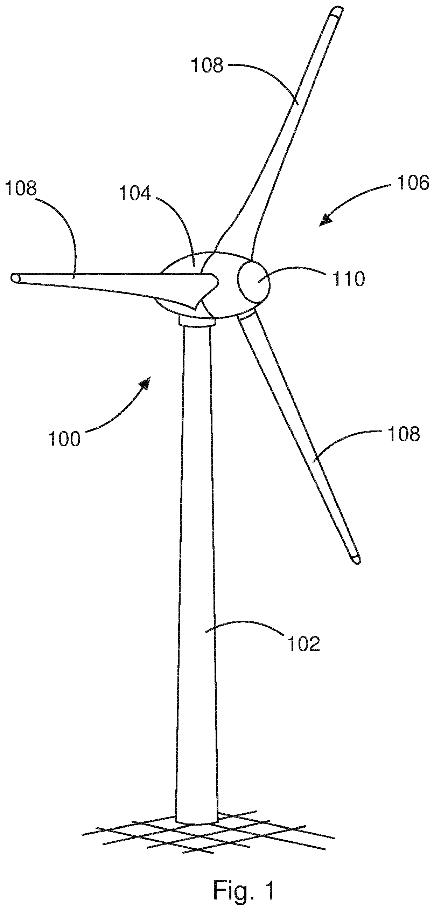

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

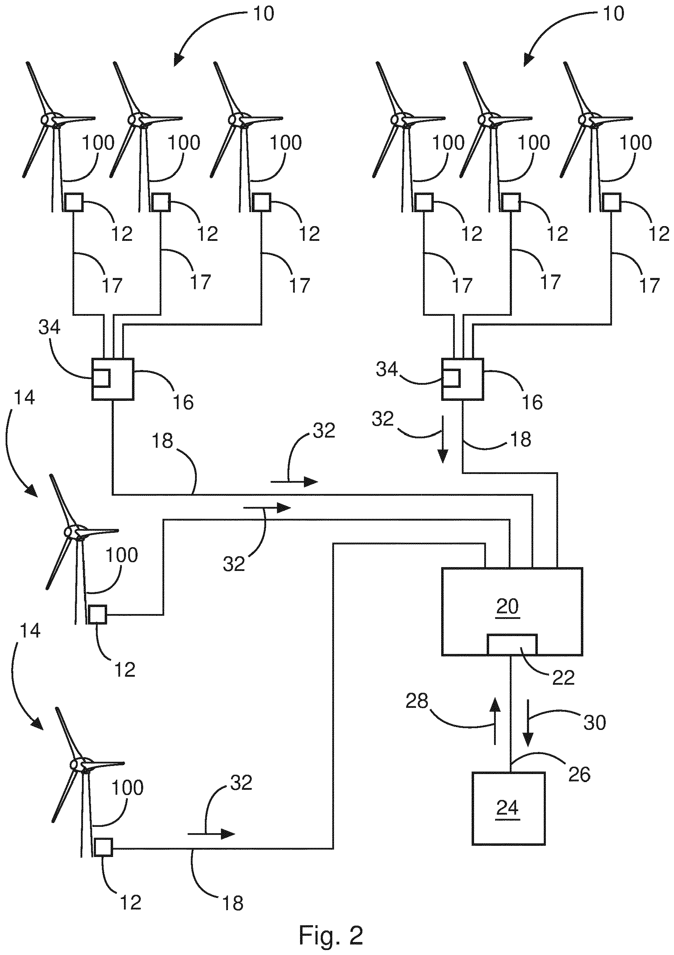

Figur 2 zeigt mehrere Windenergieanlagen 100, die entweder als Windpark 10 oder als Einzelanlagen 14 organisiert sind. Die Windenergieanlagen 100 weisen jeweils eine Steuerung 12 auf, mit der der Betrieb der jeweiligen Windenergieanlage 100 gesteuert wird. Sind die Windenergieanlagen 100 als Windpark 10 organisiert, sind die Steuerungen 12 mit einem Windparkregler 16 des jeweiligen Windparks 10 über interne Datenverbindungen 17 verbunden, um vorzugsweise den Betrieb der Windenergieanlagen 100 des jeweiligen Windparks 10 zu koordinieren.

Die Windparkregler 16 sind jeweils über eine Datenverbindung 18 mit einem Zugriffskontrollsystem 20 verbunden. Auch die als Einzelanlagen 14 organisierten Windenergieanlagen 100 sind mit dem Zugriffskontrollsystem 20 über eine Datenverbindung 18 verbunden. Demnach ist anstatt einer Datenverbindung 18 zwischen dem Windparkregler 16 und dem Zugriffskontrollsystem 20 die Datenverbindung 18 bei als Einzelanlagen 14 organisierten Windenergieanlagen 100 direkt mit einer Steuerung 12 der jeweiligen Windenergieanlage 100 verbunden.

Auch wenn die Datenverbindung 18 bei im Windpark 10 organisierten Windenergieanlagen 100 direkt mit dem Windparkregler 16 verbunden ist, so besteht über die Datenverbindung 18 und die jeweilige interne Datenverbindung 17 dennoch auch zwischen den einzelnen Windenergieanlagen 100 des Windparks 10 und dem Zugriffskontrollsystem 20 eine Verbindung zum direkten Datenaustausch. Daher kann vorzugsweise das Zugriffskontrollsystem 20 auch mit den Windenergieanlagen 100 eines Windparks 10 über den dem Windpark 10 zugeordneten Windparkregler 16 Daten austauschen. Über die Datenverbindungen 18 kann somit das Zugriffskontrollsystem 20 Daten 32 von jeder dargestellten Windenergieanlage 100, also insbesondere von jeder Steuerung 12 jeder Windenergieanlage 100 und jedem Windparkregler 16, abrufen.

Weiter umfasst das Zugriffskontrollsystem 20 eine Schnittstelle 22, mit der ein Computer 24, der insbesondere ein entfernter Computer 24 ist, verbunden werden kann. Der Computer 24 ist beispielsweise ein mobiles Gerät, wie ein tragbarer Computer, ein Tablet-PC oder ein Mobiltelefon. Über die Schnittstelle 22 ist der Computer 24 mit dem Zugriffskontrollsystem 20 über eine weitere Datenverbindung 26 verbunden, um so beispielsweise Anfragen 28 an das Zugriffskontrollsystem 20 zu senden und elektronische Schlüssel vom Zugriffskontrollsystem 20 zu empfangen.

Nachdem der Computer 24 einen elektronischen Schlüssel 30 vom Zugriffskontrollsystem 20 empfangen hat, kann beispielsweise der Computer 24 direkt mit Schnittstellen 34, die an den Windparkreglern 16 und auch den Steuerungen 12 der Windenergieanlagen 100 angeordnet sind, verbunden werden. Der elektronische Schlüssel 30 wird dann verwendet, um einen Steuerzugriff auf die verbundene Windenergieanlage 100 oder den verbundenen Windparkregler 16 zu erhalten.

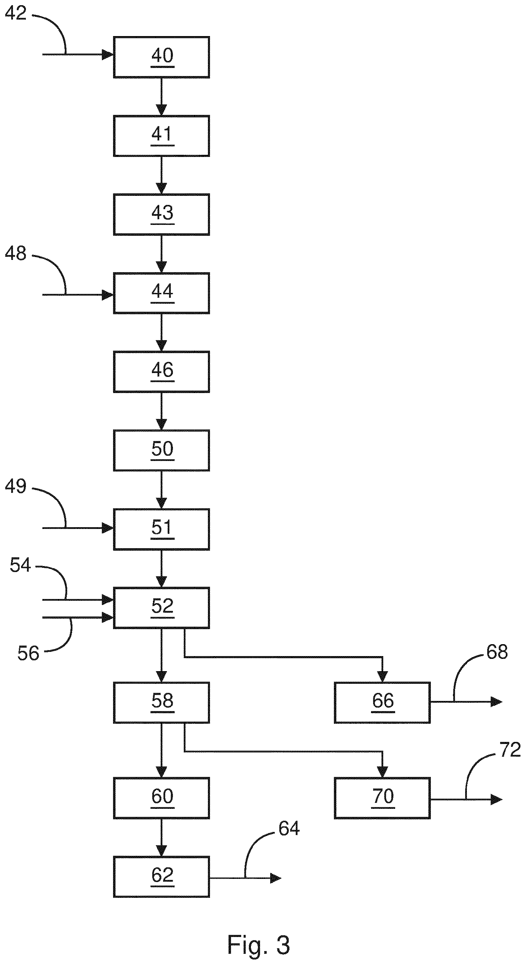

Figur 3 zeigt die Schritte eines Verfahrens zum Bereitstellen eines elektronischen Schlüssels 30, um den Zugriff auf eine Windenergieanlage 100 oder einen Windparkregler 16 eines Windparks 10 bereitzustellen. In einem Schritt 40 werden Anmeldedaten 42 vom Zugriffskontrollsystem 20 über die Schnittstelle 22 empfangen. Im Schritt 41 werden die Anmeldedaten 42 geprüft und wenn diese Anmeldedaten 42 einen Benutzer identifizieren, der für einen Zugriff auf das Zugriffskontrollsystem 20 im Zugriffskontrollsystem 20 hinterlegt ist, wird dieser Benutzer in einem Schritt 43 für die weiteren Schritte autorisiert.

Im Schritt 44, wird, nachdem ein Benutzer für die weiteren Schritte im Schritt 43 autorisiert wurde, eine Anfrage 48 für einen Zugriff auf ein oder mehrere ausgewählte Windenergieanlagen 100 und/oder ein oder mehrere ausgewählte Windparkregler 16 über die Schnittstelle 22 vom Computer 24 des Benutzers empfangen. Im darauffolgenden Schritt 46 werden dann Daten von den ausgewählten Windenergieanlagen 100 und/oder Windparkreglern 16 abgerufen, wobei im Schritt 50 die abgerufenen Daten 32 vom Zugriffskontrollsystem empfangen werden. Antwortet eine Windenergieanlagen 100 und/oder Windparkregler 16 nicht, so werden für diese nicht antwortende Windenergieanlage 100 und/oder den nicht antwortenden Windparkregler 16 in einem Schritt 51 spezifische Daten 49 aus einer Tabelle des Zugriffskontrollsystems 20 abgefragt.

Im darauffolgenden Schritt 52 wird anhand der abgerufenen Daten 32 und zusätzlich in Abhängigkeit von möglicherweise für den durch die Anmeldedaten 42 identifizierten Benutzer gespeicherte Daten 54 entschieden, ob ein ebenfalls bereitgestelltes Kriterium 56 erfüllt ist. Ist dieses Kriterium 56 erfüllt, wird im Schritt 58 mindestens ein elektronischer Schlüssel 30 für die ausgewählten Windenergieanlagen 100 und/oder Windparkregler 16 erstellt und im Schritt 60 über die Schnittstelle ausgegeben.

Nach dem Schritt 60 wird in einem Schritt 62 mit Bezug oder Verweis auf den durch die Anmeldedaten 42 identifizierten Benutzer Daten gespeichert, die entweder den empfangenen Daten 32 oder daraus abgeleiteten Daten entsprechen. Die gespeicherten Daten 54 werden dann in einem Speicher des Zugriffskontrollsystems 20 abgelegt.

Ist im Schritt 52 das Kriterium 56 nicht erfüllt, so wird in einem Schritt 66 eine Information 68 darüber ausgegeben, warum das Kriterium 56 nicht erfüllt ist. Diese Information 68 ist insbesondere aus den abgerufenen Daten 32 oder den gespeicherten Daten 54 abgeleitet. Optional wird gleichzeitig mit dem Ausgeben des elektronischen Schlüssels 30 im Schritt 60 in einem Schritt 70 ein Leistungsbegrenzungsbefehl 72 an die ausgewählte Windenergieanlage und/oder den ausgewählten Windparkregler 16 gesendet.

## Patentansprüche

1. Verfahren zum Bereitstellen eines elektronischen Schlüssels (30) für einen Zugriff, insbesondere einen Steuerzugriff, auf mindestens eine Windenergieanlage (100) oder mindestens einen Windparkregler (16) mit einem Zugriffskontrollsystem (20), umfassend die Schritte:
- Empfangen (44) einer Anfrage (48) für einen Zugriff auf eine oder mehrere mit der Anfrage (48) ausgewählte Windenergieanlagen (100) und/oder einen oder mehrere mit der Anfrage (48) ausgewählte Windparkregler (16) von einem Eingabemittel oder einer Datenschnittstelle (22) des Zugriffskontrollsystems (20),
- Abrufen (46) von Daten (32) der einen oder jeder der ausgewählten Windenergieanlagen (100) und/oder des einen oder jedes der ausgewählten Windparkregler (16) durch das Zugriffskontrollsystem (20) und
- Erstellen (58) und Ausgeben (60) mindestens eines elektronischen Schlüssels (30) für die eine oder jede der ausgewählten Windenergieanlagen (100) und/oder den einen oder jeden der ausgewählten Windparkregler (16), wenn ein Kriterium (56) erfüllt ist, wobei eine Entscheidung (52), ob das Kriterium (56) erfüllt ist, abhängig von den abgerufenen Daten (32) vom Zugriffskontrollsystem (20) getroffen wird.

2. Verfahren nach Anspruch 1, wobei vor oder mit dem Empfangen (44) der Anfrage (48) für einen Zugriff Anmeldedaten (42) für einen Benutzer von dem Eingabemittel oder der Datenschnittstelle (22) des Zugriffskontrollsystems (20) empfangen (40) werden, die Anmeldedaten (42) mit dem Zugriffskontrollsystem (20) geprüft (41) werden, und abhängig vom Ergebnis der Prüfung, der mit den Anmeldedaten (42) identifizierte Benutzer für die weiteren Schritte autorisiert (43) wird.

3. Verfahren nach Anspruch 2, wobei im Zugriffskontrollsystem (20), im Falle, dass das Kriterium (56) erfüllt ist, die abgerufenen Daten (32) oder daraus abgeleitete Daten als gespeicherte Daten (54) mit Bezug oder mit Verweis auf den durch die Anmeldedaten (42) identifizierten Benutzer gespeichert (60) werden.

4. Verfahren nach Anspruch 2 oder 3, wobei die Entscheidung (52), ob das Kriterium (56) erfüllt ist, zusätzlich abhängig von zuvor mit Bezug oder mit Verweis auf den identifizierten Benutzer gespeicherten Daten (54), getroffen wird.

5. Verfahren nach einem der vorhergehenden Ansprüche, wobei zumindest im Falle einer Ablehnung der Anfrage (48) Informationen (68) ausgegeben (66) werden, die aus den abgerufenen Daten (32) und/oder den gespeicherten Daten (54) abgeleitet werden und insbesondere den Grund für die Ablehnung anzeigen.

6. Verfahren nach einem der vorhergehenden Ansprüche, wobei der elektronische Schlüssel (30) derart erzeugt wird, dass er einen Zugriff ermöglicht, der ein Steuerzugriff ist und eine Änderung der erzeugten elektrischen Leistung der oder jeder der ausgewählten Windenergieanlagen (100) oder des oder jedes der ausgewählten Windparkregler (16) erlaubt.

7. Verfahren nach einem der vorhergehenden Ansprüche, wobei die abgerufenen Daten (32) mindestens einen Leistungswert der ausgewählten oder Leistungswerte jeweils jeder der ausgewählten Windenergieanlagen (100) und/oder mindestens einen Leistungswert der mit dem oder den ausgewählten Windparkreglern (16) verbundenen Windenergieanlagen (100) umfasst.

8. Verfahren nach Anspruch 7, wobei ein Leistungswert einer Windenergieanlage (100) oder eines Windparkreglers (16) umfasst:
- einen aktuellen Wert einer aktuell erzeugten elektrischen Leistung der Windenergieanlage (100) oder der mit dem Windparkregler (16) verbundenen Windenergieanlagen (100) und/oder
- einen statistischen Wert einer in einem vorbestimmten in der Vergangenheit liegenden Zeitraum erzeugten elektrischen Leistung der Windenergieanlage (100) oder der mit dem Windparkregler (16) verbundenen Windenergieanlagen (100) und/oder
- einen prognostizierten Wert einer elektrischen Leistung der Windenergieanlage (100) oder der mit dem Windparkregler (16) verbundenen Windenergieanlagen (100), wobei der prognostizierte Wert vorzugsweise ein maximaler Wert einer elektrischen Leistung ist, die innerhalb eines vordefinierten Zeitraums, insbesondere eines Gültigkeitszeitraums eines zu erzeugenden elektronischen Schlüssels (30) für den Zugriff auf die Windenergieanlage (100) oder den Windparkregler (16) erwartet wird.

9. Verfahren nach einem der vorhergehenden Ansprüche, wobei das Zugriffskontrollsystem (20) einen Leistungsbegrenzungsbefehl (72) an die oder jede der ausgewählten Windenergieanlagen (100) und/oder Windparkregler (16) sendet (70), um, vorzugsweise für eine Gültigkeitsdauer des entsprechenden elektronischen Schlüssels, deren Leistung zu begrenzen, insbesondere derart, dass, vorzugsweise für eine Gültigkeitsdauer des elektronischen Schlüssels (30) für den Zugriff auf die Windenergieanlage (100) oder den Windparkregler (16), eine erzeugbare elektrische Leistung auf einen Wert begrenzt wird, der gleich oder geringer als der abgefragte aktuelle Wert ist.

10. Verfahren nach einem der vorhergehenden Ansprüche, wobei im Zugriffskontrollsystem (20) für jeden identifizierbaren Benutzer ein Schwellenwert oder jeweils ein Schwellenwert hinterlegt ist, der insbesondere für jeden der Benutzer gleich ist und zur Entscheidung, ob das Kriterium (56) erfüllt ist, die Daten der ausgewählten oder aller ausgewählten Windenergieanlagen (100) und/oder des ausgewählten oder aller ausgewählten Windparkregler (16) sowie die gespeicherten Daten (54) mit dem Schwellenwert verglichen werden.

11. Verfahren nach Anspruch 10, wobei Leistungswerte, aktuelle Werte, statistische Werte oder prognostizierte Werte der empfangenen Daten für die oder jede der ausgewählten Windenergieanlagen (100) und/oder den oder jeden der ausgewählten Windparkregler (16) und die gespeicherten Daten (54) miteinander addiert werden und das Zugriffskontrollsystem (20) die Entscheidung trifft, dass das Kriterium (56) erfüllt ist, wenn die Summe der Addition auf oder unterhalb des Schwellenwerts liegt.

12. Verfahren nach einem der vorhergehenden Ansprüche, wobei im Zugriffskontrollsystem eine Tabelle mit spezifischen Daten (49) für jede auswählbare Windenergieanlage (100) und jeden auswählbaren Windparkregler (16) hinterlegt ist, wobei im Fall, dass der Abruf (44) von Daten einer oder mehrerer Windenergieanlagen (100) und/oder eines oder mehrerer Windparkregler (16) fehlschlägt, die spezifischen Daten (49) aus der Tabelle für diese oder jede dieser Windenergieanlagen (100) und/oder diesen oder jeden dieser Windparkregler (16) abgefragt (51) und als abgerufene Daten (32) verwendet werden.

13. Verfahren nach Anspruch 12, wobei die spezifischen Daten einer Windenergieanlage (100) die Nennleistung der Windenergieanlage (100) und die spezifischen Daten eines Windparkreglers (16) die Summe der Nennleistung aller mit dem Windparkregler (16) verbundenen Windenergieanlagen (100) umfasst.

14. Zugriffskontrollsystem (20) zum Ausführen eines Verfahrens nach einem der Ansprüche 1 bis 13.

15. Zugriffskontrollsystem (20) nach Anspruch 14, wobei das Zugriffskontrollsystem (20) eine Schnittstelle (22) zum Verbinden mit einem Computer (24) eines Benutzers aufweist und/oder
das Zugriffskontrollsystem (20) mit mehreren auswählbaren Windenergieanlagen (100) und/oder auswählbaren Windparkreglern (16) über eine Datenverbindung (18) verbunden ist, um vorzugsweise Daten von jeder der Windenergieanlage (100) und/oder Windparkregler (16) innerhalb eines vordefinierten Abrufzeitintervalls, das vorzugsweise geringer als fünf Minuten oder geringer als eine Minute oder geringer als fünf Sekunden ist, abrufen zu können.
